# EUROPÄISCHE PATENTSCHRIFT

(11) **EP 1 497 340 B1**
(45) Veröffentlichungstag und Bekanntmachung des Hinweises auf die Patenterteilung: **22.03.2006**
(21) Anmeldenummer: 03790778.9
(22) Anmeldetag: 28.06.2003
(51) Int. Cl.: C08F 6/08

(54) **VERFAHREN ZUR ENTFERNUNG VON METALLIONEN AUS POLYMEREN ODER POLYMERLOSUNGEN**
METHOD FOR REMOVING METAL IONS FROM POLYMERS OR POLYMER SOLUTIONS
PROCEDE D'ELIMINATION D'IONS METALLIQUES CONTENUS DANS DES POLYMERES OU DANS DES SOLUTIONS POLYMERES

(30) Priorität: 30.08.2002 DE 10240775
(43) Veröffentlichungstag der Anmeldung: 19.01.2005
(73) Patentinhaber: Röhm GmbH & Co. KG, 64293 Darmstadt (DE)
(72) Erfinder: GÖRLITZER, Hans, 62500 Seligenstadt (DE); STASCHIK, Dorothea, 61130 Nidderau (DE)
(86) Internationale Anmeldenummer: PCT/EP2003/006877
(87) Internationale Veröffentlichungsnummer: WO 2004/020483

(56) Entgegenhaltungen:
- EP-A- 0 781 782
- EP-A- 1 288 230
- DE-A- 3 520 103
- DATABASE WPI Section Ch, Week 199929 Derwent Publications Ltd., London, GB; Class A18, AN 1999-338315 XP0002207424 & CN 1 210 111 A (INST YANSHAN PETROCHEMICAL CO BEIJING) 10. März 1999 (1999-03-10)

## Beschreibung

### Gebiet der Erfindung

Die Erfindung betrifft ein Verfahren zur Entfernung von Metallkomplexen, Metallionen und Metallen aus Polymeren, Oligomeren oder Polymerlösungen oder Oligomerlösungen. Diese wurden mittels ATRP (Atom Transfer Radical Polymerization) hergestellt. Bei der Aufarbeitung wird der Katalysator, meist ein Kupferkomplex, oder auch Folgeprodukte aus dem Polymer entfernt. Weiter betrifft die vorliegende Erfindung auch die durch das erfindungsgemäße Verfahren erhältlichen Polymerzusammensetzungen sowie deren Verwendung.

### Stand der Technik

Die radikalische Polymerisation ist ein wichtiges kommerzielles Verfahren zur Herstellung einer Vielfalt von Polymeren, wie beispielsweise Polymethylmethacrylat (PMMA) und Polystyrol (PS). Nachteilig ist hierbei, dass der Aufbau der Polymere, das Molekulargewicht und die Molekulargewichtsverteilung relativ schlecht gesteuert werden können.

Eine Lösung dieser Probleme liefert das sogenannte ATRP-Verfahren (=Atom Transfer Radical Polymerisation). Es wird angenommen, dass es sich hierbei um eine "lebende" radikalische Polymerisation handelt, ohne dass durch die Beschreibung des Mechanismus eine Beschränkung erfolgen soll. In diesen Verfahren wird eine Übergangsmetallverbindung mit einer Verbindung umgesetzt, welche eine übertragbare Atomgruppe aufweist. Hierbei wird die übertragbare Atomgruppe auf die Übergangsmetallverbindung transferiert, wodurch das Metall oxidiert wird. Bei dieser Reaktion bildet sich ein Radikal, das an ethylenische Gruppen addiert. Die Übertragung der Atomgruppe auf die Übergangsmetallverbindung ist jedoch reversibel, so dass die Atomgruppe auf die wachsende Polymerkette rückübertragen wird, wodurch ein kontrolliertes Polymerisationssystem gebildet wird. Dementsprechend kann der Aufbau des Polymers, das Molekulargewicht und die Molekulargewichtsverteilung gesteuert werden.

Diese Reaktionsführung wird beispielsweise von J.-S. Wang et al., *J*.*Am*.*Chem*.*Soc*. **1995**, *117*, 5614-5615, von Matyjaszewski et al., *Macromolecules* **1995**, *28*, 7901-7910 beschrieben. Darüber hinaus offenbaren die Patentanmeldungen WO 96/30421, WO 97/47661, WO 97/18247, WO 98/20050, WO 98/40415 und WO 99/10387 Varianten der zuvor erläuterten ATRP.

Der oben beschriebene Mechanismus ist nicht unumstritten. So wird beispielsweise in WO 97/47661 beschrieben, dass die Polymerisation nicht durch einen radikalischen Mechanismus, sondern durch Insertion erfolgt. Für die vorliegende Erfindung ist diese Differenzierung jedoch ohne belang, da bei der in WO 97/47661 offenbarten Reaktionsführung Verbindungen verwendet werden, die auch bei einer ATRP eingesetzt werden.

Je nach erwünschter Polymerlösung werden die Monomere, die Übergangsmetallkatalysatoren, die Liganden und die Initiatoren ausgewählt. Es wird angenommen, dass eine hohe Geschwindigkeitskonstante der Reaktion zwischen dem Übergangsmetall-Ligand-Komplex und der übertragbaren Atomgruppe ebenso wie eine geringe Konzentration freier Radikale im Gleichgewicht wesentlich für eine enge Molekulargewichtsverteilung sind. Ist die Konzentration an freien Radikalen zu hoch, treten typische Abbruchreaktionen auf, die für eine breite Molekulargewichtsverteilung verantwortlich sind. Die Austauschrate ist beispielsweise abhängig von der übertragbaren Atomgruppe, dem Übergangsmetall, den Liganden und dem Anion der Übergangsmetallverbindung.

Ein großes Hindernis für die industrielle Umsetzung der ATRP als Methode zur Herstellung von Polymeren ist nach wie vor die Entfernung des in der Regel stark gefärbten Kupfer-Katalysators aus dem Polymer oder der Polymerlösung.

Es stört nicht nur die starke Farbe der Cu-Verbindung(en), sondern auch die Toxizität der Cu-Verbindung(en), die korrodierende Wirkung der Cu-Verbindung(en) und die Verschlechterung der Bewitterungseigenschaften des Polymers durch den Gehalt an Cu-Verbindung(en).

Die bisher bekannten Methoden zur Entfernung der Cu-Verbindungen, wie beispielsweise Filtration und/oder Chromatographie über Aluminiumoxid, Umfällungen des Polymeren aus Methanol, Behandlung mit lonenaustauscherharzen befriedigen nicht immer.

Nachteilig bei den beschriebenen Methoden ist zudem, dass sie nicht kostengünstig sind und daher der Umsetzung im industriellen Maßstab Schwierigkeiten entgegenstehen.

Adsorption von Cu-Verbindungen an Filtern, Filtermedien oder an Fällungshilfsmitteln führen zu größeren Mengen schwermetallhaltigem Abfall, der aufwendig entsorgt werden muss. Diese Mengen zu reduzieren, ist deshalb sinnvoll.

WO 2001/0 403 177 (RohMax Additives GmbH) beschreibt eine Methode zur Ausfällung und Filtration des in unpolaren Medien, hier Mineralöl, unlöslichen Katalysators. Das Anwendungsgebiet dieser Methode ist naturgemäß beschränkt.

Wang, Jackson und Armes (Macromolecules **2000,** *33*, 255 - 257) beschreiben die Entfernung von Katalysatorenresten mittels Säulen-Chromatographie an SiO₂-Säulen. Die Größe der Ansätze bewegt sich im mmol-Bereich, daher kann die Säulenchromatographie lediglich als Laboratoriumsmethode eingesetzt werden.

EP 1 132 410 beschreibt ein Verfahren, das die Katalysatorreste aus einer Lösung mit einer Viskosität von weniger als 100 Pa·s in zwei Schritten entfemt. Der erste Schritt besteht darin, den im Polymer unlöslicher Teil des Komplexes zu entfernen, der zweite Schritt darin, den im Polymer löslichen Teil des Komplexes zu entfernen. Dazu wird das Polymer erneut in einem Lösungsmittel, beispielsweise Ethylacetat, aufgelöst. Es wird eine transparente grüne Lösung erhalten, diese wird mit saurem Ionenaustauscher versetzt. Es wird gerührt, anschließend filtriert. Das Lösungsmittel muss noch verdampft werden. Das Polymer enthält 4.6 ppm Cu und 3.8 ppm Ligandenreste. Dieses Verfahren hat den Nachteil, dass am Ende der Aufarbeitung ein zusätzlicher Lösungsschritt steht. Zudem ist es wegen der Verwendung von Ionentauschern kapitalaufwendig.

### Aufgabe

Es bestand also die Aufgabe, eine Methode zu entwickeln und ein Verfahren auszuarbeiten, welche es erlauben, die schwermetallhaltigen Katalysatoren und eventuelle Folgeprodukte, die bei der ATRP verwendet werden, einfach und kostengünstig abzutrennen. Unter schwermetallhaltigen Katalysatoren wird sowohl das Schwermetall in komplex gebundener, ionischer oder metallischer Form als auch der organische Ligand und die Abbau-und/oder Zersetzungsprodukte des organischen Liganden verstanden. Die Natur dieser Produkte bedarf noch der Klärung.

Eine weitere Aufgabe der Erfindung ist es, ein Verfahren bereitzustellen, welches mit einer möglichst geringen Menge an Adsorptionsmittel den Gehalt an Kupfer (oder anderen als Katalysatoren eingesetzten Schwermetallverbindungen) unter einen praktisch relevanten Wert drückt. Das Volumen der Katalysatorabfälle sollte möglichst gering sein, um die allfälligen Entsorgungskosten gering zu halten, wenn möglich, sollten die Katalysatorabfälle in einer Form anfallen, die aufgearbeitet werden kann. Anzustreben sind, beispielsweise für Kupfer, Schwermetallgehalte unter 10 ppm im Polymer, bezogen auf Cu (best. per AAS).

Daneben war es Aufgabe der Erfindung, ein Verfahren bereitzustellen, das, gegebenenfalls bei nur geringfügig reduziertem oder gar gleichem Kupfergehalt, durch geeignete chemische Reaktionen die Farbigkeit der Polymere reduziert und, sofern möglich, die Transparenz erhöht.

Sehr geringe Schwermetallgehalte fallen in der Regel optisch nicht mehr ins Gewicht und verschlechtern zumeist auch nicht die Bewitterungseigenschaften und die Transparenz der enthaltenen Polymeren.

Schwermetallverbindungen, insbesondere Cu-Verbindungen in höheren Konzentrationen als 10 ppm, führen im Polymer zu
- Verfärbungen (durch die Eigenfarbe), Verschlechterung bei der Bewitterung, zu unerwünschter Toxizität (spez. Lebensm.-Anwendungen)
- stärkeren Verfärbungen bei thermischen Umformprozessen, wie z. B. Spitzgießen, Schmelzegranulierung, Tiefziehen, etc.
- Verschlechterung der mechanischen Eigenschaften der spritzgegossenen Artikel

### Lösung

Die Lösung der Aufgabe besteht aus einem Verfahren, das sich an die Polymerisation anschließt, welches zwei unterschiedliche methodische Schritte umfasst.
- In einem ersten Verfahrensschritt wird aus dem zumeist intensiv grün gefärbten Aminkomplex des Kupfers ein weniger stark gefärbter, hellblauer (zumindest bläulicher) Aquo-Komplex gebildet, der gebildete Cu-Komplex zum Großteil aus der organischen, polymerhaltigen Phase in eine wässrige Phase überführt, um dann anschließend
- in einem zweiten Verfahrensschritt die Cu-haltigen Verbindungen zusammen mit dem Extraktionsmittel an Zuschlägen zu absorbieren. Vorteile des erfindungsgemäßen Verfahrens
- Die Extraktion von Cu-lonen aus der organischen Polymerphase durch Verwendung einer wässrigen Phase kann zu Phasentrennungsproblemen führen. Diese Phasentrennungsprobleme reichen von langsamer über schlechte Phasentrennung mit der damit einhergehenden schlechten Abtrennung des in der wässrigen Phase angereicherten Schwermetalls sowie Verlusten an Polymer, bis hin zur nicht stattfindenden Phasentrennung. Das erfindungsgemäße Verfahren verbessert hier die Situation.
- Die Menge des einzusetzenden Adsorptionsmittels ist zur Erzielung gleicher Reduktionen des Schwermetallgehaltes deutlich geringer als bei Verwendung der Adsorbtionsmittel ohne den erfindungsgemäßen Zusatz wässriger Lösungen. Damit fallen auch geringere Mengen an schwermetallhaltigen Abfällen an.
- Der Gehalt an Restkupfer in der Polymerphase ist deutlich geringer als bei Verwendung der Adsorbtionsmittel ohne den erfindungsgemäßen Zusatz wässriger Lösungen, der Gehalt an gefärbten Cu-Verbindungen ist geringer.
- Bei gleichem in der Polymerphase verbliebenem Restkupfergehalt ist die dadurch hervorgerufene Färbung des Polymeren deutlich geringer und die Transparenz deutlich größer als bei Verwendung der Adsorbtionsmittel ohne den erfindungsgemäßen Zusatz wässriger Lösungen.
- Der Gehalt an Aminen und/oder Aminbruchstücken in der Polymerphase ist vermutlich geringer. Diese Aminen und/oder Aminbruchstücke, die bei der Zersetzung und Aufarbeitung des Cu-Katalysatorkomplexes entstehen, sind ebenfalls für Verfärbungen der Polymerphase verantwortlich.
- Im Vergleich zu einer Wiederauflösung des Polymeren in Lösungsmittel spart man die dafür nötigen Lösungsmittel, Zeit und die für die destillative Abtrennung erforderliche Energie ein.

Als Extraktionsmittel kommen Wasser oder wässrige Lösungen in Frage. Bei letzteren kann es sich um angesäuerte wässrige Lösungen handeln. Dazu geeignet sind beispielsweise Mineralsäuren, wie Schwefelsäure oder auch verschiedene organische Säuren.

Ebenso können alkalisch gemachte wässrige Lösungen eingesetzt werden.

Darüber hinaus, ist es möglich, der wässrigen Lösung andere Stoffe beizufügen, die geeignet sein können, die Löslichkeit eines Schwermetalls in einer organischen Phase zu verringern.

Die eingesetzten Mengen an wässrigem Extraktionsmittel betragen beispielsweise 0,05-20 Masse-%, bezogen auf das Polymer oder auf die Lösung des Polymeren, bevorzugt 0,1 -10 Masse-% bezogen auf das Polymer oder auf die Lösung des Polymeren und ganz besonders bevorzugt 0,2-5 Masse-%.

Als Adsorptionsmittel kommen die an sich bekannten Filtrierhilfsmittel in Frage, wie beispielsweise Cellulose, Cellulosepulver, Kieselgel, Kieselgur (z. B. Celite®, Vertrieb Fluka), Perlit, Tonsil (Vertrieb: Südchemie), Molekularsieb (Vertrieb: Merck KGaH, Darmstadt), Holzkohle, Aktivkohle und/oder Holzmehl in Frage.

Celite® stellt ein Filterhilfsmittel dar, es besteht aus Kieselgur verschiedener Korngrößen.

Tonsil® stellt eine hochaktive Bleicherde zur adsorptiven Entfärbung und Reinigung von organischen Phasen, wie beispielsweise Öle, Fette oder Wachse dar.

Unter Bleicherden werden wasserhaltige Aluminium- und/oder Magnesiumsilikate verstanden. Sie enthalten als wesentliche Bestandteile Montmorillonit oder Attapulgit. Je nach Fundort und Verwendung werden sie als Fuller-Erde, Floridin-Erden, Bentonit, Walkerde, Umbra oder Bolus usw. bezeichnet.

Die eingesetzten Mengen an Adsorptionsmittel betragen beispielsweise 0,05-20 Masse-%, bezogen auf das Polymer oder auf die Lösung des Polymeren, bevorzugt 0,1 - 10 Masse-% bezogen auf das Polymer oder auf die Lösung des Polymeren und ganz besonders bevorzugt 0,2 - 5 Masse-%.

### Durchführung des Verfahrens

### Herstellung der Polymerphase: Herstellung eines PMMA-b-P^{t}BUMA-Blockpolymeren

In einer Glove-box werden 0,773 g Cu₂O in einen Schlenk-Kolben eingewogen, ausgeschleust und an eine Mehrwegebrücke für Stickstoff und Vakuum angeschlossen. Nun werden 216,2 g Methylmethacrylat, 230 ml Toluol und 1,873 g Pentamethyldiethylentriamin im Stickstoffgegenstrom hinzugegeben. Die Mischung wird mit Trockeneis von Sauerstoff befreit und durch Anlegen von Vakuum entgast. Als nächstes wird die Mischung im Ölbad auf Reaktionstemperatur (80°C) gebracht. Nach 15 Minuten werden 1,054 g Ethyl-2-brom-2-methylpropionat (verdünnt mit einigen ml Toluol) zugespritzt und die Reaktion gestartet. Der Ansatz wird 4 h bei 80-90 °C gerührt und danach wird eine Probe genommen und 27,03 g *tert*.-Butylmethacrylat (verdünnt mit 30 ml Toluol) zugegeben. Nach weiteren 3 h Rührens bei 80-90 °C wird die Reaktionsmischung abgekühlt, und ungelöste Bestandteile über einen Druckfilter (Seitz K-700 Tiefenfilter) abgetrennt. Man erhält je nach Erfolg der Filtration eine mehr oder weniger stark grün gefärbte, ca. 50%ige Lösung des Blockcopolymeren in Toluol.

Ein beispielhaft ausgewähltes PMMA-*b*-P^{t}BUMA-Blockcopolymer hatte ein mittleres Molekulargewicht von 56.000 g/mol (durch SEC bestimmt). Die angewandte Meßmethode zu Bestimmung des mittleren Molekulargewichts war PLG-M für den mittleren Molmassenbereich. Kalibriert wurde mit PS mit linearer Extrapolation und Fit Polynom 3 im Bereich von MP 6.850.000 -1.320 g/mol. Als Eluent wurde Tetrahydrofuran verwendet.Der Gehalt des Polymers an Cu schwankt im Bereich von 200-600 ppm (durch AAS bestimmt).

### Reinigungsschritt

Man nimmt ein Aliquot der Polymerlösung und versetzt sie mit Wasser bzw. dem angegebenen Extraktionsmittel. Es wird ca. 5 min gerührt, wobei sich eine hellblaue Suspension/Emulsion bildet. Danach wird das Adsorbens zugegeben, nochmals einige Zeit gerührt und anschließend filtriert. Vergleichend wurden analoge Experimente ohne Wasser-/Extraktionsmittelzusatz durchgeführt.

### Beispiel 1-5:

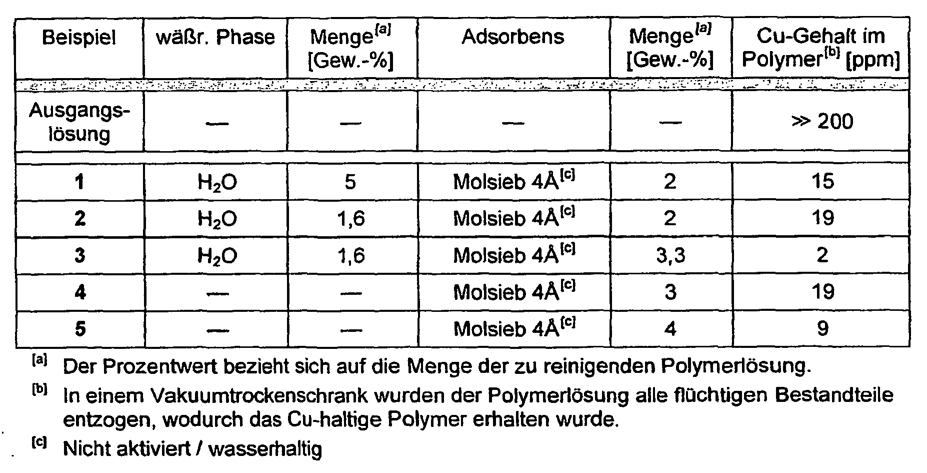

### Beispiel 6-9:

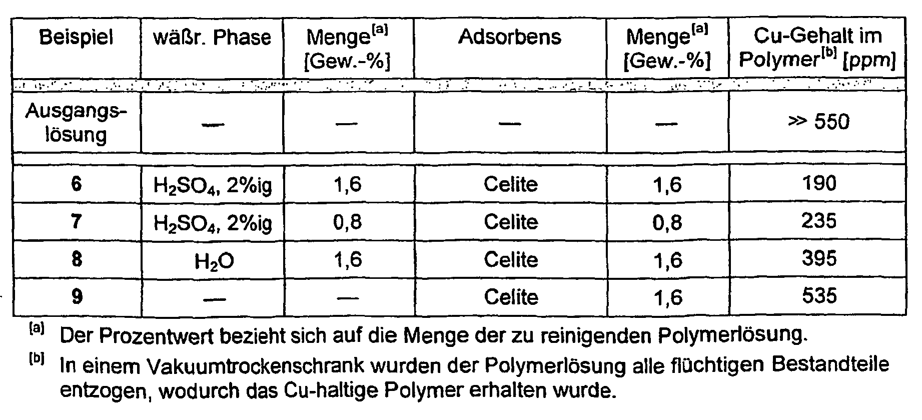

### Beispiel 10-13:

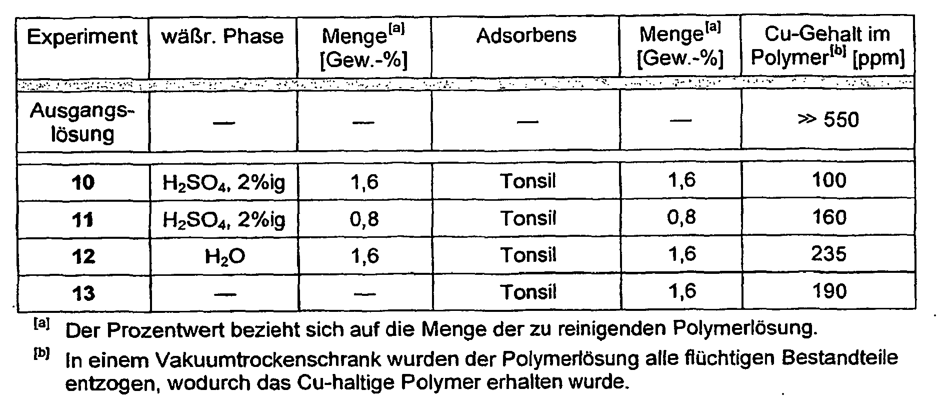

### Beispiel 14-15:

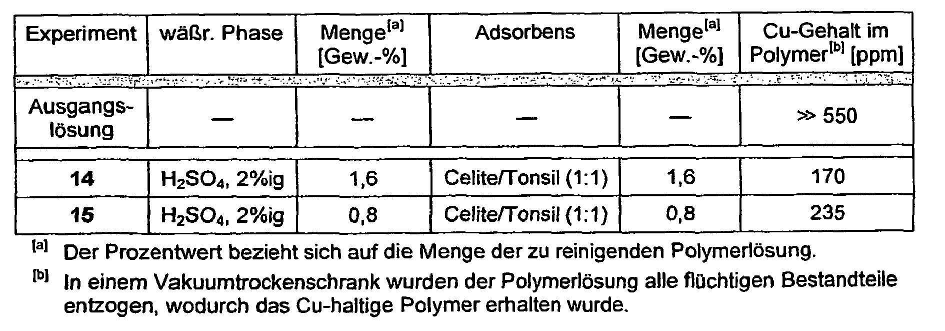

Die erhaltenen Polymere weisen selbst bei gleichem Kupfergehalt eine deutlich bessere Transparenz und eine geringere Farbigkeit auf.

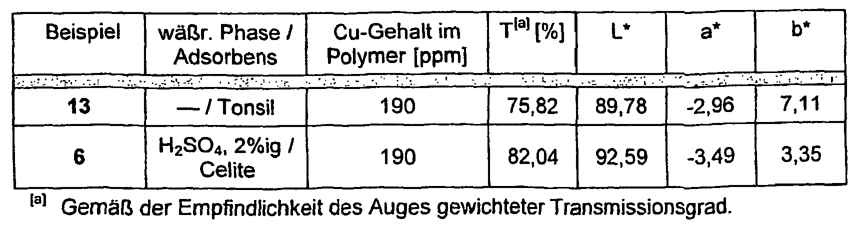

Die Testplättchen zur Messung der Transparenz wurden mit Hilfe der Plattenpresse Polystat 400 S unter folgenden Bedingungen hergestellt: Edelstahfrahmen: 80 x 80 x 1 mm, Bohrung/Form: 24 mm Durchmesser (kreisrund), Einwaage: 2 - 3 g, Vorheizen: 30 min bei 100 °C, Pressen: 30 min bei 160 °C und 80 bar, Abkühlen: unter Druck.

Die Messung und Auswertung der Proben erfolgte nach DIN 5033, Teil 3.

## Patentansprüche

1. Verfahren zur Entfernung von schwermetallhaltigen Katalysatoren oder Katalysatorrückständen aus Polymeren, Oligomeren oder Lösungen von Polymeren oder Oligomeren,
**dadurch gekennzeichnet,**
**dass** man in einem ersten Verfahrensschritt 0,05 - 20 % Gew.-% einer wässrigen Phase zu der Reaktionslösung zugibt und in einem zweiten Schritt ein adsorbierendes Agens zur entstandenen Polymeremulsion/lösung in der Menge von 0,05 - 20 Gew.-%, bezogen auf das ursprüngliche Gewicht der Polymerlösung, hinzugibt und abfiltriert.

2. Verfahren nach Anspruch 1,
**dadurch gekennzeichnet,**
**dass** die wässrige Phase Wasser ist und zu 0,1 -10 Gew.-% eingesetzt wird und das adsorbierendes Agens zu 0,1 - 10 Gew.% eingesetzt wird.

3. Verfahren nach Anspruch 1,
**dadurch gekennzeichnet,**
**dass** die wässrige Phase Wasser ist und zu 0,2 - 5 Gew.-% eingesetzt wird und das adsorbierendes Agens zu 0,2 - 5 Gew.% eingesetzt wird.

4. Verfahren nach Anspruch 1,
**dadurch gekennzeichnet,**
**dass** das adsorbierende Agens Kieselgur ist.

5. Verfahren nach Anspruch 1,
**dadurch gekennzeichnet,**
**dass** das adsorbierende Agens eine Bleicherde ist.

6. Verfahren nach Anspruch 1,
**dadurch gekennzeichnet,**
**dass** das adsorbierende Agens ein Molekularsieb darstellt.

7. Verfahren nach Anspruch 1,
**dadurch gekennzeichnet,**
**dass** die wässrige Phase angesäuert wird.

8. Verfahren nach Anspruch 1,
**dadurch gekennzeichnet,**
**dass** die wässrige Phase mit Mineralsäuren oder organischen Säuren auf einen pH von unter 4 gebracht wird.

9. Verfahren nach Anspruch 1,
**dadurch gekennzeichnet,**
**dass** die wässrige Phase alkalisch gemacht wird.

10. Verfahren nach Anspruch 1,
**dadurch gekennzeichnet,**
**dass** die wässrige Phase andere Substanzen enthält, die geeignet sein können, die Löslichkeit eines Schwermetalls in einer organischen Phase zu verringern.

11. Kunststoffformkörper, herstellbar aus einem Polymer, erhältlich nach, einem Verfahren der Ansprüche 1-10.

12. Verwendung des Polymers, erhältlich nach einem Verfahren der Ansprüche 1 - 10 zur Herstellung von Lackbindemitteln.

13. Verwendung des Polymers, erhältlich nach einem Verfahren der Ansprüche 1 - 10 zur Herstellung von Heißsiegelmassen.

14. Verwendung des Polymers, erhältlich nach einem Verfahren der Ansprüche 1 - 10 zur Herstellung von Heißsiegenlacken.

15. Verwendung des Polymers, erhältlich nach einem Verfahren der Ansprüche 1 -10 zur Herstellung von Compatibilizern.

16. Verwendung des Polymers, erhältlich nach einem Verfahren der Ansprüche 1-10 zur Herstellung von Additiven für Kunststoffformulierungen.

17. Verwendung des Polymers, erhältlich nach einem Verfahren der Ansprüche 1 - 10 zur Herstellung von Additiven für Lackformulierungen.

## Revendications

1. Procédé pour éliminer les catalyseurs ou les résidus de catalyseur, contenant des métaux lourds, de polymères, d'oligomères ou de solutions de polymères ou d'oligomères, **caractérisé en ce qu'**on ajoute, dans une première étape de procédé 0,05 à 20% en poids d'une phase aqueuse à la solution réactionnelle et on ajoute dans une deuxième étape un adsorbant à l'émulsion/solution polymère obtenue en une quantité de 0,05 à 20% en poids par rapport au poids de départ de la solution de polymère et on élimine par filtration.

2. Procédé selon la revendication 1, **caractérisé en ce que** la phase aqueuse est de l'eau et est utilisée à raison de 0,1 à 10% en poids et l'adsorbant est utilisé à raison de 0,1 à 10% en poids.

3. Procédé selon la revendication 1, **caractérisé en ce que** la phase aqueuse est de l'eau et est utilisée à raison de 0,2 à 5% en poids et l'adsorbant est utilisé à raison de 0,2 - 5% en poids.

4. Procédé selon la revendication 1, **caractérisé en ce que** l'adsorbant est du Kieselgur.

5. Procédé selon la revendication 1, **caractérisé en ce que** l'adsorbant est une terre de blanchiment.

6. Procédé selon la revendication 1, **caractérisé en ce que** l'adsorbant est un tamis moléculaire.

7. Procédé selon la revendication 1, **caractérisé en ce que** la phase aqueuse est acidifiée.

8. Procédé selon la revendication 1, **caractérisé en ce que** la phase aqueuse est amenée à un pH inférieur à 4 avec des acides minéraux ou des acides organiques.

9. Procédé selon la revendication 1, **caractérisé en ce que** la phase aqueuse est rendue alcaline.

10. Procédé selon la revendication 1, **caractérisé en ce que** la phase aqueuse contient d'autres substances qui peuvent convenir pour diminuer la solubilité d'un métal lourd dans une phase organique.

11. Corps façonné en matériau synthétique, pouvant être réalisé à partir d'un polymère pouvant être obtenu selon un procédé des revendications 1 à 10.

12. Utilisation du polymère pouvant être obtenu selon le procédé des revendications 1 à 10 pour la préparation de liants pour laque.

13. Utilisation du polymère pouvant être obtenu selon le procédé des revendications 1 à 10 pour la préparation de masses de scellement à chaud.

14. Utilisation du polymère pouvant être obtenu selon le procédé des revendications 1 à 10 pour la préparation de laques de scellement à chaud.

15. Utilisation du polymère pouvant être obtenu selon le procédé des revendications 1 à 10 pour la préparation d'agents d'amélioration de la compatibilité.

16. Utilisation du polymère pouvant être obtenu selon le procédé des revendications 1 à 10 pour la préparation d'additifs pour formulations de matériaux synthétiques.

17. Utilisation du polymère pouvant être obtenu selon le procédé des revendications 1 à 10 pour la préparation d'additifs pour des formulations de laque.

## Claims

1. Process for removing heavy-metal-containing catalysts or catalyst residues from polymers, from oligomers, or from solutions of polymers or of oligomers,
**characterized in that**
in a first step of the process from 0.05 to 20% by weight of an aqueous phase is added to the reaction solution and in a second step an amount of from 0.05 to 20% by weight, based on the initial weight of the polymer solution, of an adsorbent agent is added to the polymer emulsion solution formed and the material is filtered off.

2. Process according to Claim 1,
**characterized in that**
the aqueous phase is water, its amount used being from 0.1 to 10% by weight, and the amount of the adsorbent agent used is from 0.1 to 10% by weight.

3. Process according to Claim 1,
**characterized in that**
the aqueous phase is water, its amount used being from 0.2 to 5% by weight, and the amount of the adsorbent agent used is from 0.2 to 5% by weight.

4. Process according to Claim 1,
**characterized in that**
the adsorbent agent is kieselguhr.

5. Process according to Claim 1,
**characterized in that**
the adsorbent agent is a bleaching earth.

6. Process according to Claim 1,
**characterized in that**
the adsorbent agent is a molecular sieve.

7. Process according to Claim 1,
**characterized in that**
the aqueous phase is acidified.

8. Process according to Claim 1,
**characterized in that**
the aqueous phase is brought to a pH below 4 with mineral acids or with organic acids.

9. Process according to Claim 1,
**characterized in that**
the aqueous phase is rendered alkaline.

10. Process according to Claim 1,
**characterized in that**
the aqueous phase comprises other substances which may be suitable for reducing the solubility of a heavy metal in an organic phase.

11. Plastics moulding, capable of production from a polymer obtainable by a process of Claims 1-10.

12. Use of the polymer obtainable by a process of Claims 1-10 for the production of lacquer binders.

13. Use of the polymer obtainable by a process of Claims 1-10 for the production of hot-sealable compositions.

14. Use of the polymer obtainable by a process of Claims 1-10 for the production of hot-sealable lacquers.

15. Use of the polymer obtainable by a process of Claims 1-10 for the production of compatibilizers.

16. Use of the polymer obtainable by a process of Claims 1-10 for the production of additives for plastics formulations.

17. Use of the polymer obtainable by a process of Claims 1-10 for the production of additives for lacquer formulations.
